# EUROPEAN PATENT SPECIFICATION

(11) **EP 2 386 959 B1**
(45) Date of publication and mention of the grant of the patent: **15.04.2015**
(21) Application number: 10791505.0
(22) Date of filing: 18.06.2010
(51) Int. Cl.: G06F 13/14, G06F 13/10

(54) **COMMUNICATION DEVICE BASED ON USB INTERFACE AND METHOD FOR IMPLEMENTING SERVICE CONFIGURATION**
KOMMUNIKATIONSVORRICHTUNG AUF BASIS EINER USB-SCHNITTSTELLE SOWIE VERFAHREN ZUR IMPLEMENTIERUNG VON DIENSTKONFIGURATIONEN
DISPOSITIF DE COMMUNICATION BASÉ SUR UNE INTERFACE USB ET PROCÉDÉ DE MISE EN UVRE D'UNE CONFIGURATION DE SERVICE

(30) Priority: 08.12.2009 CN 200910242297
(43) Date of publication of application: 16.11.2011
(73) Proprietor: ZTE Corporation, Shenzhen, Guangdong 518057 (CN)
(72) Inventor: LU, Daming, Shenzhen Guangdong 518057 (CN); PANG, Shengjin, Shenzhen Guangdong 518057 (CN); LI, Kaixuan, Shenzhen Guangdong 518057 (CN); WANG, Hongli, Shenzhen Guangdong 518057 (CN); LU, Cuiling, Shenzhen Guangdong 518057 (CN)
(74) Representative: Manitz, Finsterwald & Partner GbR
(86) International application number: PCT/CN2010/074097
(87) International publication number: WO 2010/148999

(56) References cited:
- CN-A- 1 545 022
- CN-A- 101 035 039
- CN-Y- 2 921 955
- US-A1- 2005 251 596

## Description

### Technical Field

The present invention relates to the filed of communication, and in particular, to a communication device based on a USB interface and a method for implementing service configuration. US 2005/251596 A1 discloses the features of the preamble of the independent claims.

### Background of the Related Art

Currently, the user's requirements on the access terminal of a mobile broadband, for example the requirements for a data card and an Integrated Access Device (IAD) having a wireless access function increase day by day with the development of mobile broadband. With regard to a data card, a user wishes that it can be used not only on a PC (Personal Computer) but also as a wireless access module in an IAD, thereby achieving maximum utilization of resources. Meanwhile, since operators have different operating policies, the service function of a data card when used on a PC is different from its function when used on an IAD. For example, when a data card is used on a PC, the operator only wishes it to focus on data services; while when it is used on an IAD, the operator wishes it to have not only data services but also circuit-switched (CS) voice functions.

On another hand, since different PCs use different operating systems, for example, the mainstream operating systems include WINDOWS system, MAC OS and LINUX systems, and service attributes of a data card when used in various systems are also different, therefore, the service types to be supported are also different for different operating systems.

However, the existing data card cannot implement different service types according to the types of the hosts or different operating system environments of the hosts.

The defect existing in the prior art are only described above by taking a data card as an example, and other communication devices based on a USB interface also have the same defect.

### Summary of the Invention

In order to solve the problem of how a communication device based on a USB interface implement different service attributes in different environments, the present invention provides a method for implementing service configuration used for a communication device based on a USB interface, comprising:
said communication device based on the USB interface reporting a device descriptor to a host, thus making said host complete the loading of a host driver;
said communication device based on the USB interface receiving a control instruction sent from a host side through the USB interface, wherein the control instruction includes indication of types of services that can be provided; and
said communication device based on the USB interface configuring service attribute information according to the types of services that can be provided included in said control instruction, so as to enable said service attribute information to indicate service attributes of said communication device based on the USB interface.

Said step of configuring service attribute information comprises:
said communication device based on the USB interface analyzing said control instruction; and
said communication device based on the USB interface initializing said service attribute information according to information obtained after analyzing said control instruction to complete configuration of said service attribute information.

After said step of configuring service attribute information, said method further comprises:
said communication device based on the USB interface receiving service;
said communication device based on the USB interface judging whether said service is supported according to said service attribute information, if yes, executing said service; if no, executing said service abnormally.

After said step of receiving the control instruction sent from the host side, said method further comprises:
said communication device based on the USB interface sending a response message to said host side.

Said host side is a host driver or a user application program.

The present invention also provides a communication device based on a USB interface, comprising:
a sending module configured to report a device descriptor to a host to make said host complete the loading of a host driver;
a first receiving module configured to receive a control instruction, which includes indication of types of services that can be provided, sent from the host side through the USB interface after said host driver has been loaded; and
a configuring module configured to configure service attribute information according to the types of services that can be provided included in said control instruction.

Said configuring module comprises:
an analyzing unit configured to analyze said control instruction; and
an initializing unit configured to initialize said service attribute information according to information obtained after analyzing said control instruction to complete configuration of said service attribute information.

Said communication device further comprises:
a responding module configured to send a response message to said host side after said first receiving module receives said control instruction.

Said communication device further comprises:
a second receiving module configured to receiving service;
a judging module configured to judge whether said service is supported according to said service attribute information; and
a service executing module configured to execute said service when said judging module judges that said service is supported, and execute said service abnormally when said judging module judges that said service is not supported.

Said communication device based on the USB interface is a data card.

Compared with the prior art, the present invention has the following beneficial effects:
In the present invention, a user controls the service attribute information through the USB control information, including the service attributes applicable to the current system, sent from the host side, such that the device of the present invention initializes the service attribute information according to the USB control information, thereby enabling the device of the present invention to implement support to service differentiation aiming at different operating systems. Specifically, a user uses the same data card to meet requirements for use both on a PC and an IAD. In addition, the USB control instruction is sent through loading of a host driver according to the present invention, and no other additional operation is required for a User Interface (UI) of a third party or an IAD, so integration is much easier.

### Brief Description of Drawings

FIG. 1 is a structural schematic diagram of the device according to the present invention;
FIG. 2 is a structural schematic diagram of the configuring module;
FIG. 3 is a flow chart of initializing a service control table according to the present invention;
FIG. 4 is a flow chart of processing at the called side during a voice call according to the present invention;
FIG. 5 is a flow chart of processing at the calling side during a voice call according to the present invention.

### Preferred Embodiments of the Invention

As for devices based on a USB interface and interacting with a PC such as a data card, a method is required to be provided to enable it to have different service attributes when used in different environments. Taking a data card as an example, the present invention provides a device and a method for implementing indication of service attributes in a data card through a USB control instruction and thereby implementing service control.

The specific embodiments of the present invention will be further described in detail with reference to attached drawings below.

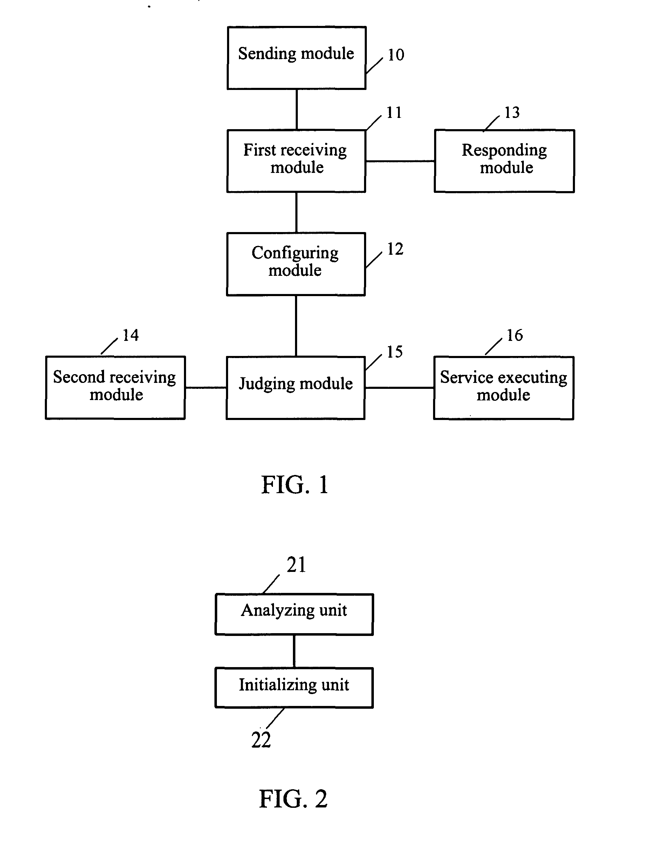

Referring to FIG. 1, FIG. 1 is a structural schematic diagram of the device according to the present invention, wherein the device comprises:
a sending module 10 used to report a device descriptor to a host to make said host complete loading of a host driver according to the device descriptor;
the host driver refers to the host driver of a USB controller at the host side, and it is an interface between an operating system and an operating and controlling USB device. The device descriptor includes: Process Identifier (PID), Voltage Identification (VID) and configuration descriptor.

A first receiving module 11 used to receive a control instruction sent from the host side upon completion of loading;
The first receiving module 11 receives a control instruction sent from the host side through a USB control end-point of the USB interface. The control instruction includes indication of types of services that can be provided, for example, the control instruction may be in the form of a character string, and 1 is defined as voice service, 2 is defined as data service, and 0 is defined as being able to provide the service, then 01 indicates being able to provide voice service, and 02 indicates being able to provide data service. Or, 0 may be defined as not providing the service, then 01 indicates not providing voice service, and 02 indicates not providing data service.

Of course, other modes that can be accepted by both parties of communication can also be used to configure the control instruction.

The host side herein may be both a host driver and a user application program on a host.

A configuring module 12 used to configure service attribute information according to the control instruction.

Service attribute information can be represented in the form of a service control table, or in other forms, and service attribute information indicates types of services that can be supported by the communication device based on the USB interface and related information. The device and method for implementing service configuration will be described below in detail by taking a service control table as an example.

Furthermore, the device of the present invention further comprises: a responding module 13 used to send a response message to the host side after the first receiving module 11 receives the control instruction.

The above module completes configuration of the service control table, and after the service control table is completely configured, specific service processing process will be executed. Therefore, the device of the present invention further comprises: a second receiving module 14, a judging module 15 and a service executing module 16.

The second receiving module 14 is used to receiving service;
the judging module 15 is used to judge whether said service is supported according to the service control table;
when the judging module 15 implements judging function, it can send an inquiry message to the configuring module 12 to inquire whether the service is stored in the service control table, and the configuring module 12 feeds back an inquiry result to the judging module 15. There are two kinds of inquiry results: the service being supported if the service is stored in the service control table, and the service being not supported if the service is not stored in the service control table.

The service executing module 16 is used to execute the service when the judging module 15 obtains information that the service is supported, otherwise, execute the service abnormally.

Referring to FIG. 2, FIG. 2 is a structural schematic diagram of the configuring module, wherein the configuring module specifically comprises:
an analyzing unit 21 used to analyze the control instruction; and
an initializing unit 22 used to initialize the service control table that is stored in advance according to information obtained after analyzing the control instruction to complete configuration of the service control table.

The analyzed control instruction is service configuration information.

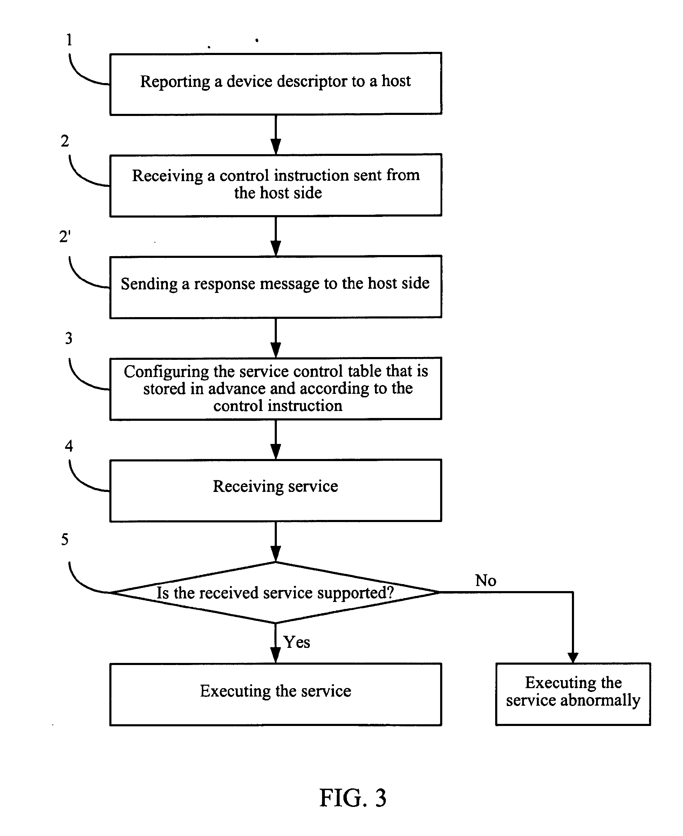

Referring to FIG. 3, FIG. 3 is a flow chart of initializing a service control table according to the present invention, comprising the following steps of:
Step 1, reporting a device descriptor to a host, thus making the host complete loading of a host driver;

The device descriptor includes: PID, VID and configuration descriptor.

Step 2, receiving a control instruction sent by the host side;
The control instruction sent by the host side can be received through a control end-point of USB. The host side is a host driver or a user application program on the host. The control instruction includes indication of the types of services that can be provided, for example, the control instruction may be in the form of a character string, and 1 is defined as voice service, 2 is defined as data service, and 0 is defined as being able to provide the service, then 01 indicates being able to provide voice service, and 02 indicates being able to provide data service. Or, 0 may be defined as not providing the service, then 01 indicates not providing voice service, and 02 indicates not providing data service.

Step 3, configuring the service control table that is stored in advance according to the control instruction.

Furthermore, after step 2, further comprising:
Step 2', sending a response message to the host side.

The process of initializing the service control table is completed by the above steps, thereby completing the configuration of the service control table. After completion of configuration, if service is accessed, whether to execute the service will be judged according to the service control table, which is specifically as follows:
Step 4, receiving service;
Step 5, judging whether the received service is supported or not according to the service control table, and if yes, executing the service, otherwise executing the service abnormally.

Operation of executing the service abnormally is: for example, if an ATD command is received, an ERROR message is directly returned when the service is not supported.

When step 5 is specifically carried out, inquiry can be performed in the service control table to judge whether the received service exists in the service control table, if yes, the received service is executed.

The process of specifically executing the initiated service after configuration of the service control table will be described below in detail with reference to two examples.

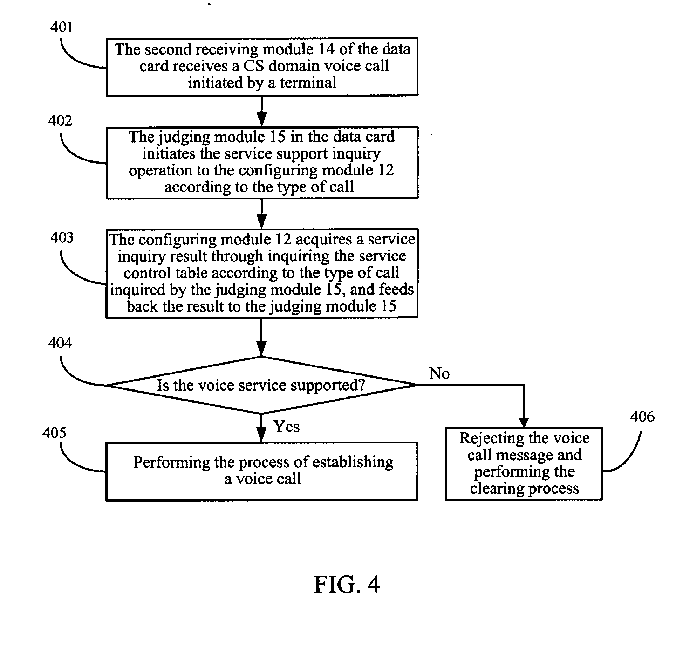

Referring to FIG. 4, FIG. 4 is a flow chart of processing at the called side during a voice call according to the present invention, comprising the following steps of:
Step 401, the second receiving module 14 of the data card receiving a CS domain voice call initiated by a terminal;
Step 402, the judging module 15 in the data card initiating service support inquiry operation to the configuring module 12 according to the type of call;
Step 403, the configuring module 12 acquiring a service inquiry result through inquiring the service control table according to the type of call inquired by the judging module, and feeding back the result to the judging module 15;
Step 404, the judging module 15 judging whether voice service is supported or not according to the inquiry result fed back by the configuring module, and if voice service is supported, executing step 405; otherwise, executing step 406;
Step 405, the service executing module 16 performing the process of establishing a voice call;
Step 406, the service executing module 16 rejecting the voice call message and performing the clearing process.

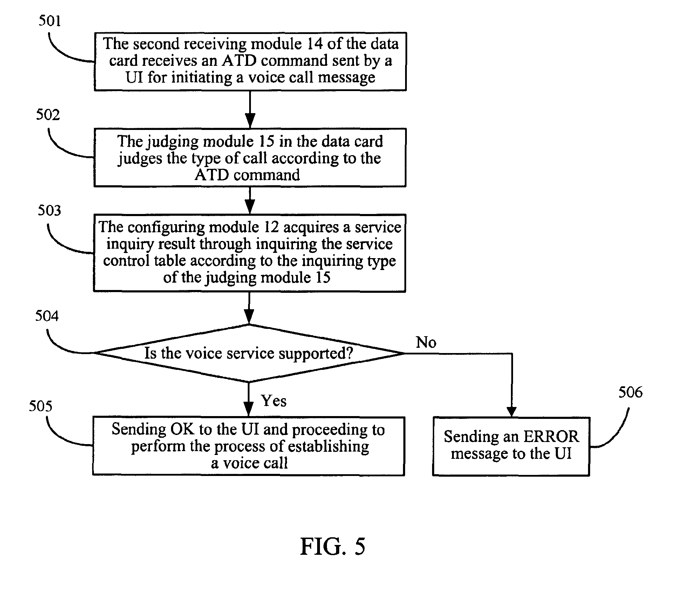

Referring to FIG. 5, FIG. 5 is a flow chart of processing at the calling side during a voice call according to the present invention, comprising the following steps of:
Step 501, the second receiving module 14 of the data card receiving an ATD command sent by an UI for initiating a voice call message;
Step 502, the judging module 15 in the data card judging the type of call according to the ATD command, and if it is voice service, such as a CS domain voice call, then inquiring to the configuring module 12 whether a voice call is supported or not;
if it is judged that the type of service is other service such as a CS domain data call, a Packet Switch (PS) domain data call and a short message, inquiring to the configuring module 12 whether the corresponding type of service is supported or not in the same manner as the CS domain voice call.
Step 503, the configuring module 12 acquiring a service inquiry result through inquiring the service control table according to inquiring type of the judging module 15, and feeding back the result to the judging module 15;
Step 504, the judging module 15 judging whether voice service is supported or not according to the inquiry result fed back by the configuring module 12, and if voice service is supported, executing step 505; otherwise, executing step 506;
Step 505, the service executing module 16 sending OK to the UI and proceeding to perform the process of establishing a voice call; otherwise, executing step 506;
Step 506, the service executing module 16 sending an ERROR message to the UI.

### Industrial Applicability

In the present invention, a user controls the service attribute information through the USB control information, including the service attributes applicable to the current system, sent from the host side, such that the device of the present invention initializes the service attribute information according to the USB control information, thereby enabling the device of the present invention to implement support to service differentiation aiming at different operating systems.

## Claims

1. A method for implementing service configuration used for a communication device based on a USB interface and comprises:
said communication device based on the USB interface reporting (1) a device descriptor to a host, thus making said host complete the loading of a host driver;
**characterized by**
said communication device based on the USB interface receiving (2) a control instruction sent from a host side through the USB interface, wherein the control instruction includes indication of types of services that can be provided; and
said communication device based on the USB interface configuring (3) service attribute information according to the types of services that can be provided included in said control instruction, so as to enable said service attribute information to indicate service attributes of said communication device based on the USB interface.

2. The method according to claim 1, wherein the step of configuring said service attribute information comprises:
said communication device based on the USB interface analyzing said control instruction; and
said communication device based on the USB interface initializing said service attribute information according to information obtained after analyzing said control instruction to complete configuration of said service attribute information.

3. The method according to claim 1, wherein, after the step of configuring said service attribute information, the method further comprises:
said communication device based on the USB interface receiving (4) service;
said communication device based on the USB interface judging (5) whether said service is supported according to said service attribute information, and if yes, executing said service; if no, executing said service abnormally.

4. The method according to claim 1, wherein, after the step of receiving the control instruction sent from the host side, the method further comprises:
said communication device based on the USB interface sending (2') a response message to said host side.

5. The method according to claim 1, wherein said host side is the host driver or a user application program.

6. A communication device based on a USB interface, comprising:
a sending module (10) configured to report a device descriptor to a host to make said host complete the loading of a host driver;
**characterized by**
a first receiving module (11) configured to receive a control instruction, which includes indication of types of services that can be provided, sent from a host side through the USB interface after said host driver has been loaded; and
a configuring module (12) configured to configure service attribute information according to the indication of types of services that can be provided included in said control instruction.

7. The communication device according to claim 6, wherein said configuring module (12) comprises:
an analyzing unit (21) configured to analyze said control instruction; and
an initializing unit (22) configured to initialize said service attribute information according to information obtained after analyzing said control instruction to complete configuration of said service attribute information.

8. The communication device according to claim 6, further comprising:
a responding module (13) configured to send a response message to said host side after said first receiving module (11) receives said control instruction.

9. The communication device according to claim 6, further comprising:
a second receiving module (14) configured to receiving service;
a judging module (15) configured to judge whether said service is supported according to said service attribute information; and
a service executing module (16) configured to execute said service when said judging module (15) judges that said service is supported, and execute said service abnormally when said judging module (15) judges that said service is not supported.

10. The communication device according to claim 6, wherein said communication device is a data card.

## Patentansprüche

1. Verfahren zum Realisieren einer Dienstkonfiguration, das für eine Kommunikationseinrichtung, die auf einer USB-Schnittstelle basiert, verwendet wird und umfasst, dass:
die Kommunikationseinrichtung, die auf der USB-Schnittstelle basiert, einem Host einen Einrichtungsdeskriptor berichtet (1), wodurch der Host veranlasst wird, das Laden eines Host-Treibers abzuschließen;
**dadurch gekennzeichnet, dass**
die Kommunikationseinrichtung, die auf der USB-Schnittstelle basiert, eine von einer Host-Seite gesendete Steueranweisung über die USB-Schnittstelle empfängt (2), wobei die Steueranweisung eine Angabe von Typen von Diensten, die bereitgestellt werden können, umfasst; und
die Kommunikationseinrichtung, die auf der USB-Schnittstelle basiert, eine Dienstattributinformation gemäß den Typen von Diensten, die bereitgestellt werden können und in der Steueranweisung umfasst sind, konfiguriert (3), um der Dienstattributinformation zu ermöglichen, Dienstattribute der Kommunikationseinrichtung, die auf der USB-Schnittstelle basiert, anzugeben.

2. Verfahren nach Anspruch 1,
wobei der Schritt des Konfigurierens der Dienstattributinformation umfasst, dass:
die Kommunikationseinrichtung, die auf der USB-Schnittstelle basiert, die Steueranweisung analysiert; und
die Kommunikationseinrichtung, die auf der USB-Schnittstelle basiert, die Dienstattributinformation gemäß einer nach dem Analysieren der Steueranweisung erhaltenen Information initialisiert, um die Konfiguration der Dienstattributinformation abzuschließen.

3. Verfahren nach Anspruch 1,
wobei das Verfahren ferner umfasst, dass nach dem Schritt des Konfigurierens der Dienstattributinformation:
die Kommunikationseinrichtung, die auf der USB-Schnittstelle basiert, einen Dienst empfängt (4);
die Kommunikationseinrichtung, die auf der USB-Schnittstelle basiert, gemäß der Dienstattributinformation beurteilt (5), ob der Dienst unterstützt wird, und wenn dies der Fall ist, den Dienst ausführt; wenn dies nicht der Fall ist, den Dienst abweichend ausführt.

4. Verfahren nach Anspruch 1,
wobei das Verfahren ferner umfasst, dass nach dem Schritt des Empfangens der Steueranweisung, die von der Host-Seite gesendet wird:
die Kommunikationseinrichtung, die auf der USB-Schnittstelle basiert, eine Antwortnachricht an die Host-Seite sendet (2').

5. Verfahren nach Anspruch 1,
wobei die Host-Seite der Host-Treiber oder ein Benutzeranwendungsprogramm ist.

6. Kommunikationseinrichtung, die auf einer USB-Schnittstelle basiert, umfassend:
ein Sendemodul (10), das ausgestaltet ist, um einem Host einen Einrichtungsdeskriptor zu berichten, um zu veranlassen, dass der Host das Laden eines Host-Treibers abschließt;
**gekennzeichnet durch**
ein erstes Empfangsmodul (11), das ausgestaltet ist, um eine von einer Host-Seite gesendete Steueranweisung, die eine Angabe von Typen von Diensten, die bereitgestellt werden können, umfasst, über die USB-Schnittstelle zu empfangen, nachdem der Host-Treiber geladen wurde; und ein Konfigurationsmodul (12), das ausgestaltet ist, um eine Dienstattributinformation gemäß der Angabe von Typen von Diensten, die bereitgestellt werden können und in der Steueranweisung umfasst sind, zu konfigurieren.

7. Kommunikationseinrichtung nach Anspruch 6, wobei das Konfigurationsmodul (12) umfasst:
eine Analyseeinheit (21), die ausgestaltet ist, um die Steueranweisung zu analysieren; und
eine Initialisierungseinheit (22), die ausgestaltet ist, um die Dienstattributinformation gemäß einer nach dem Analysieren der Steueranweisung erhaltenen Information zu initialisieren, um die Konfiguration der Dienstattributinformation abzuschließen.

8. Kommunikationseinrichtung nach Anspruch 6, ferner umfassend:
ein Antwortmodul (13), das ausgestaltet ist, um eine Antwortnachricht an die Host-Seite zu senden, nachdem das erste Empfangsmodul (11) die Steueranweisung empfangen hat.

9. Kommunikationseinrichtung nach Anspruch 6, ferner umfassend:
ein zweites Empfangsmodul (14), das ausgestaltet ist, um einen Dienst zu empfangen;
ein Beurteilungsmodul (15), das ausgestaltet ist, um gemäß der Dienstattributinformation zu beurteilen, ob der Dienst unterstützt wird; und
ein Dienstausführungsmodul (16), das ausgestaltet ist, um den Dienst auszuführen, wenn das Beurteilungsmodul (15) beurteilt, dass der Dienst unterstützt wird, und den Dienst abweichend auszuführen, wenn das Beurteilungsmodul (15) beurteilt, dass der Dienst nicht unterstützt wird.

10. Kommunikationseinrichtung nach Anspruch 6,
wobei die Kommunikationseinrichtung eine Datenkarte ist.

## Revendications

1. Procédé de mise en oeuvre de la configuration de services, utilisé pour un dispositif de communication fondé sur une interface USB et comprenant l'étape consistant à :
rapporter (1) par ledit dispositif de communication fondé sur l'interface USB un descripteur de dispositif à un hôte, ce qui fait que ledit hôte achève le chargement d'un pilote d'hôte ;
**caractérisé par** les étapes consistant à :
recevoir (2) par ledit dispositif de communication fondé sur l'interface USB une instruction de commande envoyée par un côté de l'hôte via l'interface USB, dans lequel l'instruction de commande comprend une indication des types de services qui peuvent être fournis ; et
configurer (3) par le dispositif de communication fondé sur l'interface USB des informations d'attributs de services en fonction des types de services qui peuvent être fournis et qui sont compris dans ladite instruction de commande, afin de permettre que lesdites informations d'attributs de services indiquent des attributs de services dudit dispositif de communication fondé sur l'interface USB.

2. Procédé selon la revendication 1, dans lequel l'étape de configuration desdites informations d'attributs de services comprend les étapes consistant à :
analyser ladite instruction de commande par ledit dispositif de communication fondé sur l'interface USB ; et
initialiser lesdites informations d'attributs de services par ledit dispositif de communication fondé sur l'interface USB en fonction d'informations obtenues après avoir analysé ladite instruction de commande afin d'achever la configuration desdites informations d'attributs de services.

3. Procédé selon la revendication 1, dans lequel, après l'étape de configuration desdites informations d'attributs de services, le procédé comprend en outre les étapes consistant à :
recevoir (4) un service par ledit dispositif de communication fondé sur l'interface USB ;
déterminer (5) par ledit dispositif de communication fondé sur l'interface USB, à partir desdites informations d'attributs de services, si ledit service est supporté et, si tel est le cas, exécuter ledit service ; si tel n'est pas le cas, exécuter ledit service de manière anormale.

4. Procédé selon la revendication 1, dans lequel, après l'étape de réception de l'instruction de commande envoyée par le côté de l'hôte, le procédé comprend en outre l'étape consistant à :
envoyer (2') par ledit dispositif de communication fondé sur l'interface USB un message de réponse audit côté de l'hôte.

5. Procédé selon la revendication 1, dans lequel ledit côté de l'hôte est un pilote d'hôte ou un programme applicatif d'utilisateur.

6. Dispositif de communication fondé sur une interface USB, comprenant :
un module d'émission (10) configuré pour rapporter un descripteur de dispositif à un hôte, afin que ledit hôte achève le chargement d'un pilote d'hôte ;
**caractérisé par** :
un premier module de réception (11) configuré pour recevoir une instruction de commande qui comprend une indication des types de services qui peuvent être fournis et qui est envoyée par un côté de l'hôte via l'interface USB, après que ledit pilote d'hôte a été chargé ; et
un module de configuration (12) configuré pour configurer des informations d'attributs de services en fonction de l'indication des types de services qui peuvent être fournis et qui sont compris dans ladite instruction de commande.

7. Dispositif de communication selon la revendication 6, dans lequel ledit module de configuration (12) comprend :
une unité d'analyse (21) configurée pour analyser ladite instruction de commande ; et
une unité d'initialisation (22) configurée pour initialiser lesdites informations d'attributs de services en fonction d'informations obtenues après avoir analysé ladite instruction de commande afin d'achever la configuration desdites informations d'attributs de services.

8. Dispositif de communication selon la revendication 6, comprenant en outre :
un module de réponse (13) configuré pour envoyer un message de réponse audit côté de l'hôte après que ledit premier module de réception (11) a reçu ladite instruction de commande.

9. Dispositif de communication selon la revendication 6, comprenant en outre :
un second module de réception (14) configuré pour recevoir un service ;
un module de détermination (15) configuré pour déterminer si ledit service est supporté à partir desdites informations d'attributs de services ; et
un module d'exécution de services (16) configuré pour exécuter ledit service lorsque ledit module de détermination (15) détermine que ledit service est supporté et pour exécuter ledit service de manière anormale lorsque ledit module de détermination (15) détermine que ledit service n'est pas supporté.

10. Dispositif de communication selon la revendication 6, dans lequel ledit dispositif de communication est une carte de données.
